# EUROPÄISCHE PATENTANMELDUNG

(11) **EP 1 178 400 A1**
(43) Veröffentlichungstag der Anmeldung: **06.02.2002**
(21) Anmeldenummer: 00116791.5
(22) Anmeldetag: 03.08.2000
(51) Int. Cl.: G06F 9/44

(54) **Hilfesystem mit freier Texteingabe und Rechtschreibkorrektur**

(71) Anmelder: Financialbot.com AG, 40549 Düsseldorf (DE)
(72) Erfinder: Doelle, Stefan, 47807 Krefeld (DE); Dölle, Hans-Peter, 40667 Meerbusch (DE)
(74) Vertreter: Cohausz & Florack

(57) **Zusammenfassung**

Die Erfindung betrifft ein Verfahren, ein EDV-System und ein Computer-Programm zum automatischen Bearbeiten von benutzerdefinierten Aufgaben durch einen Computer. Die Qualität der Kommunikation zwischen einem Benutzer und einem Computer wird dadurch erhöht, daß Schlüsselworte, die aus dem vom Benutzer eingegebenen Aufgabentext ermittelt werden, mit Korrekturworten für eine Rechtschreibkorrektur und/oder mit benutzerbezogenen Zusatzworten für eine benutzerspezifische Lösung der Aufgabe verglichen werden. Es kann auch eine Frage mit dem Schlüsselwort erzeugt werden, um den Benutzer zur Eingabe eines anders formulierten Aufgabentextes aufzufordern. Ebenso kann zum Erzeugen der Lösung zunächst anhand der Schlüsselworte eine Datenbankabfrage für eine Ermittlung aktueller Daten erfolgen.

## Beschreibung

Die Erfindung betrifft ein Verfahren zum automatischen Bearbeiten von benutzerdefinierten Aufgaben durch einen Computer sowie ein EDV-System und ein Computerprogramm zur Verwirklichung dieses Verfahrens.

Bei dem gattungsgemäßen Verfahren handelt es sich um ein Verfahren zur Durchführung der Kommunikation zwischen einem Benutzer und einem Computer, bei dem der Benutzer eine Frage oder allgemein eine Aufgabe in Form eines Aufgabentextes eingibt. Dabei kann die Eingabe über eine Tastatur, eine Handschriftenerkennung oder eine Spracherkennung eingeben werden. Wesentlich ist lediglich, daß vom Benutzer ein Text eingegeben werden kann, der beispielsweise in Form einer Frage oder einer Aufforderung formuliert werden kann. Aus dem Aufgabentext ermittelt dann der Computer während der Durchführung des Verfahrens ein oder mehrere Schlüsselworte. Dazu werden beispielsweise Substantive und/oder Verben anhand von grammatikalischen Regeln aus dem Aufgabentext herausgefiltert.

Anschließend werden die Schlüsselworte mit Vergleichsworten verglichen, die in einem Speichermittel wie beispielsweise einer Festplatte, einer CD-Rom oder einer DVD gespeichert sind. Wird eine Übereinstimmung zwischen dem Schlüsselwort und einem Vergleichswort ermittelt, so wird vom Computer die mit dem Vergleichswort verbundene Lösung der Aufgabe dem Benutzer angezeigt. Dazu ist beispielsweise in Form einer Tabelle jedem Vergleichswort eine Lösung, beispielsweise in Form eines Antworttextes oder eine Mehrzahl von inhaltsgleichen, jedoch unterschiedlich formulierten Antworttexten zugeordnet. Der Begriff Übereinstimmung ist dabei so zu verstehen, daß eine zeichengenaue Übereinstimmung oder auch eine in wenigen Zeichen des Schlüsselwortes vom Vergleichswort abweichende Übereinstimmung als ausreichend beurteilt werden können. Somit können beispielsweise bei Substantiven eines Aufgabentextes vorkommende unterschiedliche Deklinationen mit dem Nominativ eines Substantives in Übereinstimmung gebracht werden.

Die zuvor beschriebenen aus dem Stand der Technik bekannten Verfahren werden bisher in Kontexten eingesetzt, die eine genau definierte Menge an einzugebenden Aufgabentexten erwarten lassen. Beispielsweise finden diese Verfahren Anwendung bei einer speziellen Software, um Fragen des Benutzers in Bezug auf die Software beantworten zu können. Als Beispiele sind hier ein Textbearbeitungsprogramm oder ein Tabellenkalkulationsprogramm genannt. Darüber hinaus können die genannten Verfahren zur Information eines Benutzers in einem genau definierbaren Kontext angewendet werden.

Die aus dem Stand der Technik bekannten Verfahren sind jedoch unflexibel in den Fällen, in denen keine Übereinstimmung zwischen dem Schlüsselwort und einem Vergleichswort ermittelt werden kann. In diesen Fällen wird durch das Verfahren dem Benutzer lediglich eine nichtssagende oder eine allgemeine, nicht auf das Schlüsselwort bezogene Antwort gegeben. Zudem werden Fehler bei der Eingabe und das persönliche Benutzerprofil unbeachtet gelassen. Darüber hinaus werden lediglich vorgegebene Lösungen zu den ermittelten Vergleichsworten angezeigt, die ebenfalls nur unzureichend flexibel auf die Bedürfnisse des Benutzers, beispielsweise nach aktuellen Informationen, abgestimmt sind.

Der Erfindung liegt daher das technische Problem zugrunde, ein Verfahren zum automatischen Bearbeiten von benutzerdefinierten Aufgaben durch einen Computer anzugeben, das flexibler Lösungen zu den vom Benutzer eingegebenen Aufgabentexten angeben kann, um die Qualität der Kommunikation zwischen einem Benutzer und einem Computer zu erhöhen.

Das zuvor aufgezeigte technische Problem wird gemäß einer ersten Lehre der vorliegenden Erfindung durch ein Verfahren mit den Merkmalen des Anspruches 1 dadurch gelöst, daß dann, wenn keine Übereinstimmung zwischen dem Schlüsselwort und einem Vergleichswort vorliegt, das Schlüsselwort vom Computer mit in einem Speichermittel abgespeicherten Korrekturworten verglichen wird, daß ein Korrekturwort ausgewählt wird, das eine Ähnlichkeit mit dem Schlüsselwort aufweist und daß das Korrekturwort als neues Schlüsselwort mit den Vergleichsworten verglichen und bei einer Übereinstimmung vom Computer die mit dem Vergleichswort verbundene Lösung der Aufgabe dem Benutzer angezeigt wird. Mit Hilfe der Korrekturworte können insbesondere Schreibfehler, die bei der Eingabe des Aufgabentextes auftreten, behoben werden. Somit kann trotz einer falschen Schreibweise eines oder mehrerer Worte des Aufgabentextes dem Benutzer eine Lösung der Aufgabe angezeigt werden. Es handelt sich somit im wesentlichen um eine Rechtschreibkorrektur.

In bevorzugter Weise umfassen die Korrekturworte zumindest die Vergleichsworte und gegebenenfalls Abwandlungen der Vergleichsworte. Somit wird sichergestellt, daß auf jeden Fall eine falsche Schreibweise eines Vergleichswortes durch das erfindungsgemäße Verfahren so korrigiert wird, daß das aufgefunde Korrekturwort in Übereinstimmung mit dem entsprechenden Vergleichswort gebracht werden kann. Darüber hinaus können die Korrekturworte auch weitere Worte umfassen, die nicht direkt mit Vergleichsworten übereinstimmen, jedoch eine Weiterführung des Verfahrens ermöglichen, wie es weiter unten bei weiteren erfindungsgemäßen Lösungen dargelegt wird.

Des weiteren kann das erfindungsgemäße Verfahren so durchgeführt werden, daß vom Computer automatisch das Korrekturwort ausgewählt wird, das die größte Übereinstimmung mit dem Schlüsselwort aufweist. Dazu werden statistische oder sprachliche Kriterien verwendet, um ein Maß für die Übereinstimmung zwischen dem Schlüsselwort und einem Korrekturwort anzugeben. Daneben ist es auch möglich, daß das Korrekturwort vom Benutzer aus mehreren vom Computer ermittelten Korrekturworten ausgewählt wird. Dadurch greift der Benutzer nochmals in den Verfahrensablauf ein, kann jedoch gezielt den Eingabefehler korrigieren. Dabei ist es weiter bevorzugt, daß das Verfahren die mehreren ermittelten Korrekturworte in Form einer Fragestellung dem Benutzer zur Auswahl stellt.

Das oben aufgezeigte technische Problem wird gemäß einer zweiten Lehre der vorliegenden Erfindung durch ein Verfahren mit den Merkmalen des Anspruches 4 dadurch gelöst, daß dann, wenn keine Übereinstimmung zwischen dem Schlüsselwort und einem Vergleichswort vorliegt, das Schlüsselwort vom Computer mit in einem Speichermittel abgespeicherten benutzerbezogenenen Zusatzworten verglichen wird, daß dann, wenn eine Übereinstimmung zwischen dem Schlüsselwort und einem Zusatzwort vorliegt, vom Computer die mit dem Zusatzwort verbundene Lösung der Aufgabe dem Benutzer angezeigt wird. Somit kann die Kommunikation zwischen dem Benutzer und dem Computer durch das erfindungsgemäße Verfahren auf die Bedürfnisse des Benutzers ausgerichtet werden. Denn für das Ermitteln der Lösung der vom Benutzer eingegebenen Aufgaben werden nicht nur für alle Benutzer gleiche Vergleichsworte verwendet, sondern es kommen auch benutzerbezogene Angaben zur Anwendung. Dazu ist es erforderlich, daß der Benutzer die auf sich bezogenen Daten zuvor eingegeben hat und daß aus diesen Daten die benutzerbezogenen Zusatzworte erzeugt und abgespeichert worden sind.

Dabei können als benutzerbezogene Zusatzworte persönliche Daten verwendet werden, die beispielsweise den Namen, den Wohnort, die Anzahl der Familienangehörigen etc. umfassen. Darüber hinaus können als benutzerbezogene Zusatzworte auch Daten verwendet werden, die mit dem Kontext der Anwendung des Verfahrens verbunden ist. Liegt der Kontext der Anwendung des Verfahrens beispielsweise im Bereich einer Finanzdienstleistung, so können als benutzerbezogene Zusatzworte auch die Namen von Bankinstituten, von Firmen, an denen der Benutzer ein besonderes Interesse hat, und von Aktiendepots einbezogen werden. Somit können Aufgabenstellungen des Benutzers vom Computer gelöst werden, die sich auf benutzerbezogene Informationen beziehen, und die mit Hilfe der Zusatzworte vom Computer gelöst werden können. Somit können neben Standardthemen, die über die für alle Benutzer gleichen Vergleichsworte bearbeitet werden können, auch benutzerbezogene Themen und damit verbundene Aufgabenstellungen gelöst werden. Das erfindungsgemäße Verfahren ermöglicht somit eine weitgehend benutzerbezogene Kommunikation.

Das oben aufgezeigte technische Problem wird gemäß einer dritten Lehre der vorliegenden Erfindung durch ein Verfahren mit den Merkmalen des Anspruches 7 dadurch gelöst, daß dann, wenn keine Übereinstimmung zwischen dem Schlüsselwort und einem Vergleichswort vorliegt, aus dem Schlüsselwort vom Computer eine Frage erzeugt wird, bei dem die Antwort auf die Frage vom Benutzer eingegeben wird, bei dem die Antwort vom Computer bezüglich mindestens eines neuen Schlüsselwortes analysiert wird und bei dem dann, wenn mindestens ein neues Schlüsselwort vom Computer festgestellt worden ist, das neue Schlüsselwort mit den Vergleichsworten verglichen wird. Somit wird wirkungsvoll vermieden, daß dann, wenn keine Übereinstimmung zwischen dem Schlüsselwort und einem Vergleichswort vorliegt, nur eine nichtssagende Antwort auf die vom Benutzer eingegebene Aufgabe angezeigt wird.

Denn, obwohl das Verfahren nicht zu einer Ermittlung einer Lösung der Aufgabe gelangt, wird die Kommunikation zwischen dem Benutzer und dem Computer aufrecht erhalten. Die das Schlüsselwort enthaltende, vom Computer erzeugte Frage entspricht zum einen einer typischen menschlichen Reaktion, wenn die Aufgabenstellung nicht verstanden worden ist. Zum anderen wird der Benutzer aufgefordert, den eingegebenen Aufgabentext zu verändern. Dadurch verändert oder konkretisiert der Benutzer gegebenenfalls den Aufgabentext so, daß mindestens ein neues Schlüsselwort durch das erfindungsgemäße Verfahren ermittelt wird, anhand dessen eine Lösung der Aufgabe ermittelt werden kann.

Daher wird in bevorzugter Weise das Erzeugen einer Frage durch den Computer und das Eingeben einer Antwort durch den Benutzer so oft wiederholt, bis ein neues Schlüsselwort ermittelt worden ist. Auch wenn dieses zu einer längeren Kette von Fragen führen kann, die für einen Benutzer unbefriedigend ist, so weist das Verfahren gegenüber dem Stand der Technik den Vorteil auf, daß eine nichtssagende oder ablehnende Antwort vermieden wird.

In besonders bevorzugter Weise wird zum Erzeugen der Frage aus dem Schlüsselwort der aus dem Stand der Technik bekannte Eliza-Algorithmus verwendet. Dieser Algorithmus wurde von Joseph Weizenbaum für eine weitgehend natürliche sprachliche Kommunikation zwischen einem Benutzer und einem Computer entwickelt. Der Eliza-Algorithmus verläuft so, daß Schlüsselworte identifiziert werden, der kleinste Kontext ermittelt wird, eine geeignete Transformation, also beispielsweise eine Fragestellung, ausgewählt wird, und in Abhängigkeit vom Schlüsselwort eine Frage erzeugt wird, die das Schlüsselwort enthält. Dadurch kann das beschriebene Verfahren intelligent ein Schlüsselwort, zu dem keine Lösung der zugrunde liegenden Aufgabe gefunden wurde, weiter verarbeitet werden, ohne daß ein nichtssagender oder abweisender Text als Antwort dem Benutzer angezeigt wird.

Gemäß einer vierten Lehre der vorliegenden Erfindung wird das oben aufgezeigte technische Problem durch ein Verfahren mit dem Merkmalen des Anspruches 10 dadurch gelöst, daß vom Computer in Abhängigkeit von den Schlüsselworten eine Datenbankabfrage durchgeführt wird und daß die Lösung der Aufgabe zumindest teilweise mit Hilfe des Datenbankergebnisses erzeugt wird. Durch diese erfindungsgemäße Maßnahme wird die Funktionalität des Verfahrens dahingehend erweitert, daß nicht nur vorgegebene, mit den Vergleichsworten verbundene Lösungen dem Benutzer angezeigt werden können, sondern daß mit Hilfe des vom Benutzer eingegebenen Aufgabentextes eine Fragestellung verbunden ist, die ein Beschaffen weiterer Informationen aus einer oder mehreren Datenbanken erfordert.

So kann beispielsweise im Kontext einer Finanzdienstleistung der Benutzer die Aufgabe stellen, zu einer bestimmten Aktie den aktuellen Wert anzuzeigen oder den Kursverlauf über eine eingegebene Zeitdauer graphisch darzustellen. Da somit eine sehr große Vielzahl von möglichen Lösungen der Aufgabe vorgehalten werden müßten, die zudem ständig aktualisiert werden müßten, kann dieses nicht durch eine definierte Antwortliste zu den Schlüsselworten realisiert werden. Erfindungsgemäß wird daher das Verfahren so durchgeführt, daß beispielsweise in einer Datenbank die entsprechenden Kursdaten der Aktie ermittelt werden und die Lösung der Aufgabe dann dem Benutzer angezeigt wird. Dem Benutzer steht somit ein leicht zu bedienendes Verfahren zur Verfügung, um auch komplexe Aufgabenstellungen durch Formulieren einer umgangssprachlichen Frage oder Aufgabe beantwortet und gelöst zu bekommen.

Dabei kann beim Ablauf des erfindungsgemäßen Verfahrens sowohl über das Internet als auch über ein Intranet auf die Datenbank zugegriffen werden. Ebenso ist es möglich, daß die Datenbank auf einem Speichermittel im Computer hinterlegt ist, der zur Durchführung des Verfahrens verwendet wird.

Die zuvor beschriebenen vier verschiedenen Lehren der vorliegenden Erfindung können beliebig miteinander kombiniert werden, um das gattungsgemäße Verfahren zum automatischen Bearbeiten von benutzerdefinierten Aufgaben durch einen Computer weiter zu entwickeln. Dieses wird durch die Ansprüche 13 bis 15 zusammengefaßt. Aus diesen Kombinationen ergeben sich weitere vorteilhafte Eigenschaften.

Werden beispielsweise die benutzerbezogenen Zusatzworte mit in die Korrekturworte einbezogen, so wird die automatische Korrektur falsch eingegebener Schlüsselworte auch auf die Zusatzworte erstreckt.

Werden Korrekturworte und/oder benutzerbezogene Zusatzworte bei der Ermittlung der Lösung der Aufgabe eingesetzt, so kann die Anzahl der nicht erkannten Schlüsselworte und somit das Erzeugen von Fragen mit den Schlüsselworten in Umfang reduziert werden. Ein häufiges Erzeugen von Fragen verbunden mit der Aufforderung an den Benutzer, eine anders formulierte Aufgabe einzugeben, wird somit vermieden.

Wird dagegen die Variante des Verfahrens, mit Hilfe einer Datenbankabfrage die Lösung der Aufgabe zu erzeugen, mit der Verwendung von Korrekturworten und/oder Vergleichsworten und/oder dem Erzeugen von Fragen mit Schlüsselworten kombiniert, können komplexe Aufgabenstellungen, die Datenabfrage erfordern, besser erkannt werden, da dem Computer zu Erzeugen der Datenbankabfrage mehr Informationen zur Verfügung stehen.

Sämtliche zuvor beschriebene Verfahren können noch in den folgenden bevorzugten Weisen weiter ausgestaltet werden.

Zunächst können in vorteilhafter Weise als Schlüsselworte Kombinationen aus Buchstaben, Zahlen und/oder Sonderzeichen ermittelt werden. Somit ist der Benutzer nicht auf die Eingabe von Aufgabentexten beschränkt, die ausschließlich aus Buchstaben bestehen. Daher ist der Begriff "Wort" im Rahmen der vorliegenden Erfindung weit zu fassen. So kann ein Wort beispielsweise eine Zahlenangabe, ein Datum, eine Zeitangabe oder auch eine Zahlenrelation mit Hilfe der Sonderzeichen ">" und "<" als Sonderzeichen umfassen.

Zuvor sind die verschiedenen erfindungsgemäßen Ausgestaltungen des Verfahrens so dargestellt worden, daß jeweils ein Schlüsselwort ermittelt und weiter verarbeitet worden ist. Dieses stellt jedoch keine Beschränkung des Verfahrens dar. Daher ist es bevorzugt, daß mindestens zwei Schlüsselworte ermittelt werden und daß die Lösung der Aufgabe aus der Kombination der ermittelten Schlüsselworte ermittelt wird. Gerade bei komplexen Aufgabestellungen reicht in der Regel nicht ein Schlüsselwort aus, um die Aufgabe präzise zu definieren.

Will beispielsweise der Benutzer bei der Anwendung des Verfahrens im Bereich einer Finanzdienstleistung den Kursverlauf einer bestimmten Aktie angezeigt bekommen, so muß der eingegebene Aufgabentext mindestens den Namen der Aktie oder eine entsprechende Wertpapiernummer und der Zeitraum enthalten, um daraus die Aufgabenstellung ableiten zu können. Werden also mindestens zwei Schlüsselworte ermittelt, so können die erfindungsgemäßen Ausgestaltungen des Verfahrens jeweils auf die aufgefundenen Schlüsselworte mit Hilfe eines Vergleiches mit Korrekturwerten und/oder benutzerbezogenen Zusatzworten verglichen werden oder zu einer Fragestellung umgewandelt werden, bevor eine Datenbankabfrage zur Ermittlung der Lösung durchgeführt wird.

Die vorliegende Erfindung betrifft neben den Verfahren zum automatischen Bearbeiten von benutzerdefinierten Aufgaben durch einen Computer auch ein EDV-System zur Verwirklichung dieser Verfahren, das in der nachfolgenden Beschreibung eines Ausführungsbeispieles näher erläutert wird. Ebenso betrifft die Erfindung ein Computerprogramm mit Programmbefehlen für ein EDV-System zur Verwirklichung dieser Verfahren, die zudem auf einem maschinenlesbaren Medium gespeichert sein können. Somit soll neben dem erfindungsgemäßen Verfahren auch Schutz für ein entsprechendes EDV-System und ein entsprechendes Computer-Programm erlangt werden.

Zuvor sind zur Erläuterung der Erfindung Beispiele im Kontext von Finanzdienstleistungen angegeben worden. Dieses stellt jedoch keine Beschränkung der Anwendung der Erfindung dar. Denn das erfindungsgemäße Verfahren kann in allen zuvor angegebenen Ausgestaltungen in beliebigen Bereichen angewendet werden.

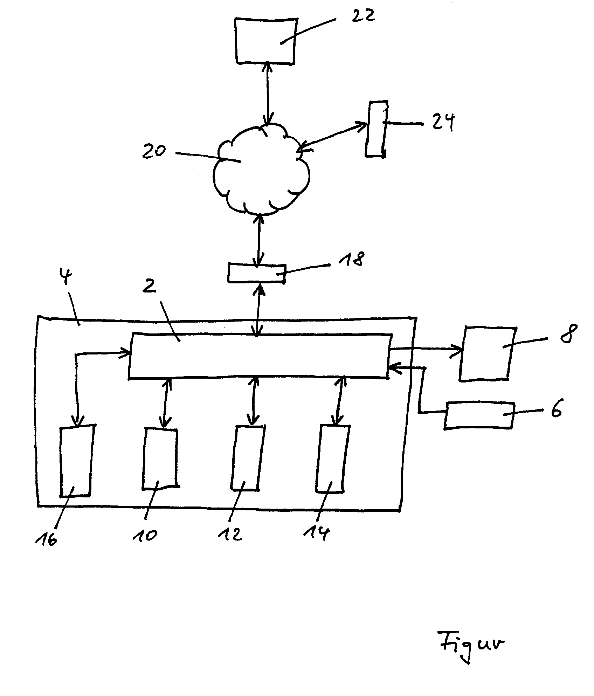

Die Erfindung wird im folgenden anhand von Ausführungsbeispielen näher erläutert, wobei auf die beigefügte Zeichnung bezug genommen wird. In der Zeichnung zeigt die einzige Figur eine schematische Darstellung eines erfindungsgemäßen EDV-Systems zur Verwirklichung des erfindungsgemäßen Verfahrens zum automatischen Bearbeiten von benutzerdefinierten Aufgaben.

Im Arbeitsspeicher 2 eines Computers 4 wird ein Programm geladen, das einzelne Programmbefehle zur Durchführung des erfindungsgemäßen Verfahrens aufweist. Mit Hilfe einer Tastatur 6 kann ein Benutzer einen Aufgabentext, der aus beliebigen Buchstaben, Zahlen oder Sonderzeichen bestehen kann, eingeben. Zur Anzeige des eingegebenen Aufgabentextes und der ermittelten Lösung bzw. Antwort ist ein Bildschirm 8 vorgesehen. Anstelle der Tastatur 6 kann auch eine Einrichtung zur Handschriftenerkennung, ein Mikrofon zur Stimmaufzeichnung oder jedes andere geeignete Eingabemittel für eine Spracherkennung vorgesehen sein.

Für die Durchführung der verschiedenen Varianten des erfindungsgemäßen Verfahrens kann das im Arbeitsspeicher 2 geladene und ablaufende Programm auf die Speichermittel 10, 12, 14 und 16 zugreifen, die entweder als separate Speichermittel oder in Kombination als ein gemeinsames Speichermittel ausgebildet sein können. Die Inhalte und die Funktionsweise des Zusammenwirkens der zuvor aufgezeigten Elemente wird im folgenden anhand eines Ausführungsbeispiels eines erfindungsgemäßen Verfahrens dargestellt.

Nachdem ein Benutzer über die Tastatur 6 einen Aufgabentext eingegeben hat, wird vom im Arbeitsspeicher 2 ablaufenden Programm, also dem Computer, ein oder mehrere Schlüsselworte anhand von grammatikalischen Regeln ermittelt. Im Speichermittel 10 sind eine Mehrzahl von Vergleichsworten abgespeichert und das Programm führt einen Vergleich des mindestens einen Schlüsselwortes mit den Vergleichsworten durch.

Ist nur ein Schlüsselwort aufgefunden worden, so wird dann, wenn eine Übereinstimmung des Schlüsselwortes mit einem Vergleichswort festgestellt wird, die mit dem Vergleichswort verbundene Lösung der Aufgabe auf dem Bildschirm 8 dargestellt.

Sind mindestens zwei Schlüsselworte aufgefunden worden, so werden diese einzeln mit den Vergleichsworten verglichen. Einerseits kann dann, wenn mindestens eines der aufgefundenen Schlüsselworte mit einem Vergleichswort übereinstimmt, die damit verbundene Lösung dargestellt werden. Andererseits ist es möglich, erst dann die Lösung der Aufgabe darzustellen, wenn mindestens zwei oder alle der aufgefundenen Schlüsselworte mit Vergleichsworten in Übereinstimmung gebracht worden sind.

Erfindungsgemäß wird dann, wenn keine Übereinstimmung zwischen dem aufgefundenen Schlüsselwort und dem Vergleichswort vorliegt, das Schlüsselwort vom im Arbeitsspeicher 2 ablaufenden Programm mit im Speichermittel 12 abgespeicherten Korrekturworten verglichen. Bei einer Übereinstimmung mit einem Korrekturwort wird dann die damit verbundene Lösung der Aufgabe dem Benutzer am Bildschirm 8 angezeigt. Dazu wird das Korrekturwort als neues Schlüsselwort mit den Vergleichsworten verglichen.

Wird das erfindungsgemäße Verfahren beispielsweise im Rahmen einer Finanzdienstleistung angeboten, so kann von einem Benutzer der Aufgabentext "Was bedeutet der Begriff Aktie" eingegeben werden. Als Schlüsselwort wird das Programm den Begriff "Aktie" ermitteln und anschließend eine Definition des Begriffes als Lösung der Aufgabe darstellen.

Schreibt der Benutzer nun das Wort "Aktie" falsch, beispielsweise mit einem Vertauschen zweier Buchstaben in der Form "Aktei", so wird das Verfahren keine Übereinstimmung mit einem Vergleichswort feststellen. Das erfindungsgemäße Verfahren kann jedoch darüber hinaus das Schlüsselwort "Aktei" mit den Korrekturworten vergleichen. Diese umfassen vorzugsweise sämtliche Begriffe aus dem Bereich der Finanzdienstleistungen also vorliegend auch das Wort "Aktie". Da die Übereinstimmung zwischen dem Wort "Aktei" und "Aktie" wegen des Vertauschens von nur zwei Buchstaben groß ist, kann das Programm den richtigen Begriff "Aktie" als das Korrekturwort mit der größten Übereinstimmung mit dem Schlüsselwort "Aktei" auswählen und anschließend mit den Vergleichsworten vergleichen. Auch hier wird dann als Lösung der Aufgabe eine Definition zu dem Begriff "Aktie" dem Benutzer angezeigt.

Bei einer anderen Ausgestaltung des Verfahrens wird dem Benutzer in Form einer Auswahlfrage eine Mehrzahl von Korrekturworten angezeigt, die eine Ähnlichkeit mit dem falsch geschriebenen Begriff "Aktei" aufweisen. Der Benutzer kann dann durch eine Konkretisierung bzw. eine Korrektur des Aufgabentextes das Programm erneut ablaufen lassen.

Bei einer anderen Ausgestaltung der Erfindung sind im Speichermittel 14 eine Mehrzahl von benutzerbezogenen Informationen gespeichert. Diese Informationen bestehen aus Zusatzworten, mit denen jeweils vorgegebene Aufgabenlösungen verknüpft sind. Wird dann beim Ablauf des Programmes festgestellt, daß das Schlüsselwort nicht mit einem Vergleichswort übereinstimmt, so wird das Schlüsselwort oder mehrere Schlüsselworte mit den benutzerbezogenen Zusatzworten verglichen und dort eine Lösung der Aufgabe gesucht. Wird bei den benutzerbezogenen Zusatzworten eine Übereinstimmung gefunden so wird diese auf dem Bildschirm 8 dargestellt.

Im Kontext der Finanzdienstleistungen ergibt sich folgendes Beispiel. Zu einem registrierten Benutzer sind zum einen die persönlichen Daten wie Name, Adresse, Telefonnummer etc. gespeichert. Zum anderen sind Namen von Firmen gespeichert, von denen der registrierte Benutzer Aktien besitzt. Ebenso können Namen von Investmentfonds als benutzerbezogene Zusatzworte auf dem Speichermittel 14 abgespeichert sein. Als Beispiel eines Namens eines Investmentfonds wird im folgenden die Buchstabenkette "XYZ" verwendet.

Der Benutzer kann dann als Aufgabentext eingeben: "Zeige mir XYZ!". Das erfindungsgemäße Verfahren wird dann keine Übereinstimmung zwischen dem Schlüsselwort " XYZ " und einem Vergleichswort feststellen. Da jedoch das Wort " XYZ " als benutzerbezogenes Zusatzwort auf dem Speichermitttel 14 abgespeichert ist, kann das erfindungsgemäße Programm das Schlüsselwort " XYZ " mit den Zusatzworten vergleichen, so daß die mit den Zusatzwort " XYZ " verbundene Lösung der Aufgabe ermittelt werden kann. Diese Lösung kann beispielsweise eine allgemeine Information zu dem Investmentfond " XYZ " beinhalten.

Bei einer weiteren Ausgestaltung des erfindungsgemäßen Verfahrens wird dann, wenn keine Übereinstimmung zwischen dem Schlüsselwort und einem Vergleichswort vorliegt, mit Hilfe des im Arbeitsspeicher 2 ablaufenden Programms eine Frage erzeugt, die dem Benutzer auf dem Bildschirm 8 angezeigt wird. Der Benutzer wird dadurch aufgefordert, einen neuen Aufgabentext einzugeben, der gegebenenfalls ein anderes Schlüsselwort als die bisherigen Schlüsselworte enthält. Mit diesem zusätzlichen Schlüsselwort wird dann ein Vergleich mit den Vergleichsworten durchgeführt und gegebenenfalls eine somit aufgefundene Lösung der Aufgabe dem Benutzer auf dem Bildschirm 8 angezeigt.

Dabei kann beispielsweise der Eliza-Algorithmus von Joseph Weizenbaum angewendet werden, der durch Wiederholen von Schlüsselworten in Form einer Gegenfrage den Benutzer auffordert, einen neuen Aufgabentext einzugeben.

Bei einer weiteren Ausgestaltung des erfindungsgemäßen Verfahrens wird vom Computer, also vom im Arbeitsspeicher 2 ablaufenden Computer-Programm in Abhängigkeit von dem mindestens einen Schlüsselwort eine Datenbankabfrage durchgeführt. Dazu wird entweder eine aktuelle Datenbank, die auf einem Speichermedium 16 gespeichert ist, verwendet oder das Programm nimmt über eine Schnittstelle 18 über das Internet 20 Kontakt mit einem externen Computer 22 auf, auf dem eine Datenbank installiert ist. Aus der Datenbank werden entsprechend der sich aus dem mindestens einem Schlüsselwort ergebenen Aufgabe ein Abfrageergebnis ermittelt, das zumindest teilweise in das Erzeugen der Lösung der Aufgabe einfließt.

Beispielsweise kann dies im Kontext einer Finanzdienstleistung folgendermaßen umgesetzt werden. Ein Benutzer kann den Aufgabentext "Wie steht der aktuelle Kurs der Aktie ABC?" wobei die gezeichnete "ABC" für den Namen oder den Kurznamen der Aktiengesellschaft steht. Als Schlüsselworte ermittelt das Programm mittels des erfindungsgemäßen Verfahrens die Schlüsselworte "Kurs", "Aktie" und "ABC". Das Programm ermittelt daraus, daß nicht eine Definition zu einem Begriff "Aktienkurs" Inhalt der Aufgabe ist, sondern das der Kurswert der Aktie "ABC" angezeigt werden soll. Dazu ist zunächst eine Datenbankabfrage erforderlich, die mittels des internen Speichermittels 16 oder des Internets 20 und dem externen Rechner 22 erfolgt. Dort wird der aktuelle Aktienkurs der Aktie ABC abgefragt und liegt danach dem im Arbeitsspeicher 2 ablaufenden Programm vor. Daraus kann das Programm anschließend die Lösung der Aufgabe erzeugen, die vorliegend beispielsweise lautet: "Der Kurs der Aktie ABC beträgt aktuell 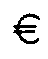 123,--".

Wie am vorigen Beispiel gezeigt worden ist, können mehrere Schlüsselworte aus einem Aufgabentext ermittelt werden, um die gegebenenfalls auch komplexe Aufgabe durch das Programm bestimmen zu können. Die Lösung der Aufgabe wird dann aus einer Kombination der ermittelten Schlüsselworte ermittelt.

Zuvor ist das erfindungsgemäße Verfahren so beschrieben worden, daß der Benutzer direkt über eine mit dem Computer verbundene Tastatur 6 und einem Bildschirm 8 mit dem Computer 4 kommuniziert. Selbstverständlich ist es auch möglich, daß der Benutzer über einen Computer 24 über das Internet 20 und die Schnittstelle 18 mit dem Computer 4 in Verbindung tritt. Das im Arbeitsspeicher 2 ablaufende Programm übermittelt dann über das Internet 20 die Reaktion und gegebenenfalls die Lösung der Aufgabe dem Benutzer, dem diese auf dem Bildschirm seines Computers 24 angezeigt werden.

## Patentansprüche

1. Verfahren zum automatischen Bearbeiten von benutzerdefinierten Aufgaben durch einen Computer,
- bei dem ein Aufgabentext von einem Benutzer eingegeben wird,
- bei dem ein Schlüsselwort vom Computer aus dem Aufgabentext ermittelt wird,
- bei dem das Schlüsselwort vom Computer mit in einem Speichermittel abgespeicherten Vergleichsworten verglichen wird,
- bei dem dann, wenn eine Übereinstimmung zwischen dem Schlüsselwort und einem Vergleichswort ermittelt wird, vom Computer die mit dem Vergleichswort verbundene Lösung der Aufgabe dem Benutzer angezeigt wird,
- **dadurch gekennzeichnet,**
- **daß** dann, wenn keine Übereinstimmung zwischen dem Schlüsselwort und einem Vergleichswort vorliegt, das Schlüsselwort vom Computer mit in einem Speichermittel abgespeicherten Korrekturworten verglichen wird,
- **daß** ein Korrekturwort ausgewählt wird, das eine Ähnlichkeit mit dem Schlüsselwort aufweist, und
- **daß** das Korrekturwort als neues Schlüsselwort mit den Vergleichsworten verglichen und bei einer Übereinstimmung vom Computer die mit dem Vergleichswort verbundene Lösung der Aufgabe dem Benutzer angezeigt wird.

2. Verfahren nach Anspruch 1,
bei dem die Korrekturworte zumindest die Vergleichsworte und ggf. Abwandlungen der Vergleichsworte umfassen.

3. Verfahren nach Anspruch 1,
bei dem das Korrekturwort vom Computer ausgewählt wird, das die größte Übereinstimmung mit dem Schlüsselwort aufweist, oder bei dem das Korrekturwort vom Benutzer aus mindestens zwei vom Computer ermittelten Korrekturworten ausgewählt wird.

4. Verfahren zum automatischen Bearbeiten von benutzerdefinierten Aufgaben durch einen Computer,
- bei dem ein Aufgabentext von einem Benutzer eingegeben wird,
- bei dem ein Schlüsselwort vom Computer aus dem Aufgabentext ermittelt wird,
- bei dem das Schlüsselwort vom Computer mit in einem Speichermittel abgespeicherten Vergleichsworten verglichen wird,
- bei dem dann, wenn eine Übereinstimmung zwischen dem Schlüsselwort und einem Vergleichswort ermittelt wird, vom Computer die mit dem Vergleichswort verbundene Lösung der Aufgabe dem Benutzer angezeigt wird,
- **dadurch gekennzeichnet,**
- **daß** dann, wenn keine Übereinstimmung zwischen dem Schlüsselwort und einem Vergleichswort vorliegt, das Schlüsselwort vom Computer mit in einem Speichermittel abgespeicherten benutzerbezogenenen Zusatzworten verglichen wird,
- **daß** dann, wenn eine Übereinstimmung zwischen dem Schlüsselwort und einem Zusatzwort vorliegt, vom Computer die mit dem Zusatzwort verbundene Lösung der Aufgabe dem Benutzer angezeigt wird.

5. Verfahren nach Anspruch 4,
bei dem als benutzerbezogene Zusatzworte persönliche Daten verwendet werden.

6. Verfahren nach Anspruch 4 oder 5,
bei dem als benutzerbezogene Zusatzworte Daten, die mit dem Kontext der Anwendung des Verfahrens verbunden sind, verwendet werden.

7. Verfahren zum automatischen Bearbeiten von benutzerdefinierten Aufgaben durch einen Computer,
- bei dem ein Aufgabentext von einem Benutzer eingegeben wird,
- bei dem ein Schlüsselwort vom Computer aus dem Aufgabentext ermittelt wird,
- bei dem das Schlüsselwort vom Computer mit in einem Speichermittel abgespeicherten Vergleichsworten verglichen wird,
- bei dem dann, wenn eine Übereinstimmung zwischen dem Schlüsselwort und einem Vergleichswort ermittelt wird, vom Computer die mit dem Vergleichswort verbundene Lösung der Aufgabe dem Benutzer angezeigt wird,
- **dadurch gekennzeichnet,**
- **daß** dann, wenn keine Übereinstimmung zwischen dem Schlüsselwort und einem Vergleichswort vorliegt, aus dem Schlüsselwort vom Computer eine Frage erzeugt wird,
- bei dem die Antwort auf die Frage vom Benutzer eingegeben wird,
- bei dem die Antwort vom Computer bezüglich mindestens eines neuen Schlüsselwortes analysiert wird und
- bei dem dann, wenn mindestens ein neues Schlüsselwort vom Computer festgestellt worden ist, das neue Schlüsselwort mit den Vergleichsworten verglichen wird.

8. Verfahren nach Anspruch 7,
bei dem das Erzeugen einer Frage und das Eingeben einer Antwort so oft wiederholt werden, bis ein neues Schlüsselwort ermittelt worden ist.

9. Verfahren nach Anspruch 7 oder 8,
bei dem zum Erzeugen der Frage aus dem Schlüsselwort der Eliza-Algorithmus verwendet wird.

10. Verfahren zum automatischen Bearbeiten von benutzerdefinierten Aufgaben durch einen Computer,
- bei dem ein Aufgabentext von einem Benutzer eingegeben wird,
- bei dem ein Schlüsselwort vom Computer aus dem Aufgabentext ermittelt wird,
- bei dem das Schlüsselwort vom Computer mit in einem Speichermittel abgespeicherten Vergleichsworten verglichen wird,
- bei dem dann, wenn eine Übereinstimmung zwischen dem Schlüsselwort und einem Vergleichswort ermittelt wird, vom Computer die mit dem Vergleichswort verbundene Lösung der Aufgabe dem Benutzer angezeigt wird,
- **dadurch gekennzeichnet,**
- **daß** vom Computer in Abhängigkeit von dem Schlüsselwort eine Datenbankabfrage durchgeführt wird und
- **daß** die Lösung der Aufgabe zumindest teilweise mit Hilfe des Datenbankergebnisses erzeugt wird.

11. Verfahren nach Anspruch 10,
bei dem der Zugriff auf die Datenbank über das Internet durchgeführt wird.

12. Verfahren nach Anspruch 10 oder 11,
bei dem der Zugriff auf die Datenbank über ein Intranet durchgeführt wird.

13. Verfahren zum automatischen Bearbeiten von benutzerdefinierten Aufgaben durch einen Computer mit den Merkmalen der Ansprüche 1 bis 3,
**gekennzeichnet durch** die Merkmale der kennzeichnenden Teile der Ansprüche 4 bis 12.

14. Verfahren zum automatischen Bearbeiten von benutzerdefinierten Aufgaben durch einen Computer mit den Merkmalen der Ansprüche 4 bis 6,
**gekennzeichnet durch** die Merkmale der kennzeichnenden Teile der Ansprüche 7 bis 12.

15. Verfahren zum automatischen Bearbeiten von benutzerdefinierten Aufgaben durch einen Computer mit den Merkmalen der Ansprüche 7 bis 9,
**gekennzeichnet durch** die Merkmale der kennzeichnenden Teile der Ansprüche 10 bis 12.

16. Verfahren nach einem der vorangegangenen Ansprüche, bei dem als Schlüsselworte Kombinationen aus Buchstaben, Zahlen und/oder Sonderzeichen ermittelt werden.

17. Verfahren nach einem der vorangegangenen Ansprüche, bei dem mindestens zwei Schlüsselworte ermittelt werden und bei dem die Lösung der Aufgabe aus der Kombination der ermittelten Schlüsselworte ermittelt wird.

18. Verfahren nach einem der vorangegangenen Ansprüche, bei dem dann, wenn mehr als eine Lösung mit einem ermittelten Schlüsselwort, diese dem Benutzer zur Auswahl, insbesondere in Form einer Fragestellung angezeigt werden.

19. Verfahren nach einem der vorangegangenen Ansprüche, bei dem die Verbindung zwischen dem Benutzer und dem Computer über das Internet hergestellt wird.

20. Verfahren nach einem der vorangegangenen Ansprüche, bei dem der Computer direkt vom Benutzer bedient wird.

21. EDV-System zum automatischen Bearbeiten von benutzerdefinierten Aufgaben zur Verwirklichung eines Verfahrens nach einem der Ansprüche 1 bis 20.

22. Computer-Programm zum automatischen Bearbeiten von benutzerdefinierten Aufgaben mit Programmbefehlen für ein EDV-System zur Verwirklichung eines Verfahrens nach einem der Ansprüche 1 bis 20.

23. Computer-Programm nach Anspruch 22, gespeichert auf einem maschinenlesbaren Medium.
